(19) 

Europäisches
Patentamt
European
Patent Office
Office européen
des brevets

(11) **EP 2 402 125 A1**

(12) **EUROPEAN PATENT APPLICATION**

(43) Date of publication:
 **04.01.2012 Bulletin 2012/01**

(51) Int Cl.:
 **B26D 5/00** *(2006.01)* **B26F 3/12** *(2006.01)*
 **G05B 19/404** *(2006.01)*

(21) Application number: **10167625.2**

(22) Date of filing: **29.06.2010**

| | |
|---|---|
| (84) Designated Contracting States:<br> **AL AT BE BG CH CY CZ DE DK EE ES FI FR GB GR HR HU IE IS IT LI LT LU LV MC MK MT NL NO PL PT RO SE SI SK SM TR**<br> Designated Extension States:<br> **BA ME RS** | (71) Applicant: **Siemens Aktiengesellschaft 80333 München (DE)**<br><br>(72) Inventor: **Stege, Jason 7330, Brande (DK)** |

(54) **Method of producing test components by a hot wire cutter**

(57)    The present invention relates to a method of controlling the operation of a hot wire cutter (100) for forming a three dimensional profile component out of a raw material block (104). The hot wire cutter comprises a wire extending between a first attachment point (105) and a second attachment point (106), wherein by movement of the hot wire cutter, the wire cuts material from the raw material block. The method comprises determining a first offset (a) and a second offset (b), wherein each offset defines a distance between one of the attachment points and a respective reference point (P, Q) at a perimeter of a cross-section (107, 108) of the component to be formed. Thus, the method comprises controlling a movement of the first attachment point and the second attachment point depending on the determined first offset and the determined second offset.

## FIG 1

EP 2 402 125 A1

## Description

Field of invention

The present invention relates to a method of controlling the operation of a hot wire cutter for forming a component with a three-dimensional profile out of a raw material block. Moreover, the present invention relates to the hot wire cutter for forming the component. Furthermore, the present invention relates to a control unit, a computer-readable medium and a program element for controlling the operation of the hot wire cutter.

Art Background

Conventional hot wire foam cutters comprise two towers that are connected by a thin metal wire, often made of Nichrome or stainless steel. Each tower comprises a positioning system so that the towers may move the wire in a two dimensional direction. The wire is heatable via electrical resistance to approximately 180° C to 300° C. By moving the hot wire with the respective positioning systems of the towers, the wire is moved through a material to be cut, such as a foam block, so that the heat from the wire cuts or vaporizes the material.

Such an above-described hot wire cutter is used in the field of prototyping and other technical fields, such as in surf-board construction. In the field of prototyping, substantially aerodynamic components, such as wings or blades of a turbine may be formed by the hot wire cutter out of foam.

For forming a component by the hot wire cutter, several control methods for hot wire cutters are known. One known control method is to place a foam block between the two towers and move the towers as close as possible to the foam block. By placing the towers as close to the foam block as possible, there is always a small gap between an attachment point of the wire at the tower and the edges of the foam block. This gap has to be taken into account when calculating the position coordinates of the wire for forming the desired shape. By using this control method, it is difficult to correct a change of the distance of the tower with respect to the foam. Thus, the gap between the towers and the foam block may vary during movement of the towers, so that the gap leads to an inaccurate shape of the component to be formed, e.g. sharp corners may be formed that have to be rounded manually. The distortion can be quite severe if the size of the geometries of the cross-section of the component to be formed differs.

Other control methods calculate the gap between each tower and the foam block. The control method uses predefined standard set of points of predetermined profiles. For example, if the component is an airfoil, the airfoil to be formed may be defined by a standard set of points, wherein for the airfoils a standard airfoil format is defined. The standard set of points may only be varied by scaling, i.e. the size of the airfoils may be varied. The shape of the standard profile is in general not amendable. If the distance between the tower to the airfoil varies due to a different scaling of the airfoil, the foam block has to be adjusted exactly with respect to the predetermined standard set of points. A variation of the distance between the foam and the tower may lead to a distorted airfoil.

Summary of the Invention

It may be an object of the present invention to provide a proper control method for a hot wire cutter in order to form a variety of different profiles.

This object may be solved by a method of controlling the operation of a hot wire cutter, by a hot wire cutter, by a control unit for controlling the operation of the hot wire cutter, by a computer-readable medium, on which there is stored a computer program for controlling the operation of the hot wire cutter and by a program element for controlling the operation of a hot wire cutter according to the independent claims.

According to a first aspect of the present invention, a method of controlling the operation of a hot wire cutter for forming a component with a three-dimensional profile out of a raw material block is presented. The hot wire cutter that is controlled by the control method comprises a wire extending between the first attachment point and the second attachment point. Moreover, the hot wire cutter comprises a first positioning system for moving the first attachment point within a first attachment plane being spanned by a first direction and a second direction. Moreover, the hot wire cutter comprises a second positioning system for moving the second attachment point within a second attachment plane being spaced apart and being oriented parallel to the first attachment plane.

According to the control method, a first cross-section of the three-dimensional profile is defined, wherein the first cross-section is oriented within a first surface plane of the raw material block. Next, a second cross-section of the three-dimensional profile is defined, wherein the second cross-section is oriented within a second surface plane of the raw material block. The two surface planes are parallel to the first attachment plane and are spaced apart from each other along a third direction. According to the control method, a first reference point is selected on a perimeter of the first cross-section and a second reference point is selected on a perimeter of the second cross-section. A connection line between the two reference points is indicative of a desired run of the wire through the raw block material for forming the three-dimensional profile. Moreover, a first offset within the first surface plane between the first reference point and the first attachment point is determined. Additionally a second offset within the second surface plane between the second reference point and the second attachment point is determined. A movement of the first attachment point and the second attachment point is controlled depending on the determined first offset and the determined second offset.

According to a further aspect of the invention a hot wire cutter for forming a component with a three-dimensional profile out of the block of raw material is presented. The hot wire cutter is controllable by the above-described control method. The hot wire cutter comprises the wire extending between the first attachment point and the second attachment point. Additionally, the hot wire cutter comprises the first positioning system for moving the first attachment point within the first attachment plane being spanned by the first direction and the second direction. The second positioning system for moving the second attachment point within the second attachment plane being spaced apart and being oriented parallel to the first attachment plane.

According to a further aspect of the present invention a control unit for controlling the operation of the above described hot wire cutter is presented. The control device comprises a data processor, which is adapted for performing and/or controlling the method as described above.

According to a further aspect of the invention, a computer-readable medium, on which there is stored a computer program for controlling the operation of the hot wire cutter as described above is presented. The computer program, when being executed by a data processor, is adapted for performing the method as described above.

Furthermore, according to a further aspect of the invention, a program element for controlling the operation of the above-described hot wire cutter is presented. The program element, when being executed by a data processor, is adapted for performing the method as described above.

The raw material block may comprise in particular a cuboid shape with two parallel side surfaces, wherein each side surface is orientated to a respective positioning system. The side surfaces are located in a respective surface plane. Between the positioning systems and a respective surface plane of the raw material block a gap with a predetermined or measurable distance exists.

The first surface plane and the second surface plane of the raw material block may be located on opposed sides of the raw material block. Moreover, the surface planes may be defined by a planar section, e.g. a part of a side surface of the block, wherein other sections of the block comprise e.g. an alternating (side) surface, which is non-planar.

The first positioning system and the second positioning system are adapted for holding the wire at its respective ends, i.e. at its attachment points. The first attachment point of the wire connected to the first positioning system is movable along a first two-dimensional plane, i.e. along the first attachment plane. The second positioning system defines a second attachment plane, along which the second attachment point of the wire is moveable. The second attachment plane is spaced from the first positioning plane and orientated parallel to the first attachment plane. In particular, the second attachment plane is spaced from the first attachment plane along a third direction.

The terms "first cross-section" and "second cross-section" denote a desired final shape of a cross-section of the three-dimensional component that is to be formed. In particular, the first cross-section may be parallel with the first surface plane and the second cross-section may be parallel with the second surface plane of the raw material block.

The first reference point at the first cross-section and the second reference point at the second-cross section define a dedicated point pair, wherein between these points the wire runs. The run of the wire defines the shape of the component to be formed. Each reference point may be defined by two coordinates, i.e. within the two dimensional surface plane of the raw material block, wherein one coordinate may be a position along the first direction and the second coordinate may define a position along the second direction starting form a predetermined point of reference.

The connection line defines the desired run of the wire in an operating state of the hot wire cutter. If the wire is spanned along the desired connection line and if the wire is moved around the perimeter of the first cross-section and the second cross-section, the wire cuts during the movement the raw material block, so that the desired shape of the component is formed.

In order to provide an exact controlling of the movement of the wire along surface planes, i.e. along the first and the second direction, the position and the movement of the first attachment point and the second attachment point with respect to the raw material block has to be exactly determined, so that the positioning systems may exactly control the movement of the wire along the perimeter of the first and the second cross-sections.

In particular, the first attachment point comprises a first offset with respect to the first reference point and the second attachment point comprises a second offset with respect to the second reference point. In order to control exactly the movement of the wire with the first positioning system and the second positioning system, the first offset and the second offset has to be determined exactly, so that the correct position of the first and second attachment points for the wire can be determined. If the first and second attachment points are not determined exactly, the desired run of the connection line differs to the real run of the wire, so that a distorted shape of the component is formed.

In particular, when the foam block, the first positioning system and the second positioning system comprise varying distances with respect to each other, the offsets have to be adapted, because a varying distance in the third direction leads to a necessary adjustment of the first and second attachment points. In comparison to the conventional control methods, by the claimed control method, the first offset and the second offset are taken into account for controlling the first and second positioning system.

The first offset denotes the distance between the first attachment point and the first reference point along the first and the second direction. The second offset denotes the distance between the second reference point and the second attachment point along the first and the second direction. Thus, in order to have a run through the first and second reference point, the position of the attachment points of the wire have to be determined, wherein the differences of the position of the attachment points to the respective reference points are defined by the first and second offsets.

It is not longer necessary to locate the positioning system close to the foam block or to predefine a fixed and unchangeable distance between the positioning systems and the raw material block, so that only conventional components are formable.

By the above-described invention, the distance of the first and second positioning systems with respect to the raw material block may differ, because, depending on the distances, the control method determines a corrected first offset and second offset, so that a run of the wire (i.e. the position of the attachment points) is adaptable.

The first direction, the second direction and the third direction may be orientated in an exemplary embodiment orthogonal with respect to each other. Other angles between the directions, in particular between the first direction and the second direction may be possible as well. In an exemplary embodiment the first direction, the second direction and the third direction define a Cartesian coordinate system. The first reference point and the second reference point may be defined by two coordinates, one indicative of the first direction and the second indicative of the second direction. Additionally, the reference points may be defined by a third coordinate that is indicative of the third direction.

According to a further exemplary embodiment, the determining of the first offset comprises a determining of a first offset projection along the first direction between the first reference point and the first attachment point based on

i) a first distance between the first attachment plane and the first surface plane along the third direction, and
ii) a first angle between a first line running through the first attachment point along the third direction and the first projection of the connection line onto a first reference plane being spanned by the first direction and the third direction.

The determining of the second offset comprises a determining of a second offset projection along the first direction between the second reference point and the second attachment point based on

i) a second distance between the second attachment plane and the second surface plane along the third direction, and
ii) the first angle.

The first offset projection and the second offset projection along the first direction are projections of the first offset and the second offset onto the first reference plane.

Thus, by the present exemplary embodiment the first offset is determined by a projection onto the first reference plane, spanned by the first and the third direction. The first offset projection is dependent on the first angle and the distance between the raw material block and the respective attachment plane. Depending on a distance of the positioning system (i.e. the attachment points) to the raw material block, the angle of the desired connection line changes, so that the attachment points have to be moved and adapted in order to correct the run of the connection line through the first reference point and the second reference point. Thus, the determining of the first offset projection and the second offset projection may be applied with e.g. real-time calculations, so that as well during operation of the hot wire cutter the attachment points may be adjusted to a varying distance between the positioning systems and the raw material block. Thus, a flexible adaptable control method is provided.

According to a further exemplary embodiment of the present invention the determining of the first offset projection and/or the determining of the second offset projection further comprises the determining of the first angle. The first angle is determined on the basis of

i) a distance between the first surface plane and the second surface plane along the third direction and
ii) a third direction between the first reference point and the second reference point along the first direction.

By the exemplary embodiment, the first angle is dependent on the distance between the first surface plane and the second surface plane along the third direction, which may be also denoted as the width of the foam block along the third direction. The distance in the first direction between the first reference point and the second reference point defines an inclination of the connection line in the second direction.

Thus, a more flexible control method is achieved, because the first angle may be calculated on the basis of varying distances. Thus, the first angle must not be predefined, but may be adaptable to varying events, such as changing raw material block sizes, rescaling of the component, etc.. Because the control method recalculates the first angle on the basis of the varying parameters, the run of the connection line and thus the desired run of the wire may be adapted.

In the following, further first and second offset projection along a plane spanned by the second direction and third direction may be determined as well:

According to a further exemplary embodiment, the determining of the first offset further comprises a determining of a further first offset projection along the second direction between the first reference point and the first attachment point. The determining of the further first offset projection is based on

i) the first distance and
ii) a second angle between the first line and a second projection of the connection line onto a second reference plane being spanned by the second direction and the third direction. Moreover, the determining of the second offset further comprises the determining of the further second offset projection along the second direction between the second reference point and the second attachment point. The determining of the further second offset projection is based on the second distance and the second angle.

According to a further exemplary embodiment the determining of the further first offset projection and/or the determining of the further second offset projection further comprises the determining of the second angle. The determining of the second angle is based on

i) the distance between the first surface plane and the second surface plane along the third direction, and
ii) a fourth distance between the first reference point and the second reference point along the second direction.

The second angle is dependent on the distance between the first surface plane and the second surface plane along the third direction, which may be also denoted as the width of the foam block along the third direction. The distance along the second direction between the first reference point and the second reference point defines an inclination of the connection line in the second direction.

According to a further exemplary embodiment a further first reference point on the perimeter of the first cross-section and a further second reference point on the perimeter of the second cross-section is selected. A further connection line between the two further reference points is indicative of a further desired run of the wire through the raw material block. A further first offset is determined within the first surface plane between the further first reference point and the first attachment point. A further second offset is determined within the second surface plane between the further second reference point and the second attachment point. A movement of the first attachment point and the second attachment point is controlled depending on the determined further first offset and the determined further second offset.

By the above-described exemplary embodiments, a plurality of first reference points may be defined onto the perimeter of the first cross-section and a plurality of dedicated second reference points onto the second perimeter of the second cross-section are defined. The more first and second reference points are defined onto the first and second cross-sections, the smoother the surface of the formed component, because a more exact controlling of the movement of the wire between the first and second reference points in the tangential direction around the perimeter of the cross-sections to the further first and further second reference points is calculatable.

In particular, approximately 200 point pairs of first reference points with dedicated second reference points may be defined. In other exemplary embodiments approximately 100 point pairs or less may be defined or approximately 300 point pairs and more may be defined.

According to a further exemplary embodiment, the controlling of the movement of the first attachment point and the second attachment point further comprises the determining of coordinates of the first attachment point and the second attachment point on the basis of the determined first offset and the second offset. The coordinates are converted to a G-code for controlling the hot wire cutter, in particular to a G-code for controlling a CMC controlled hot wire cutter.

The G-code is a standard in the numerical control programming language. The G-codes are the codes that position the hot wire cutter, so that the actual work can be done by controlling the machine. By the G-code, operations to the hot wire cutter may be given, such as movement speed, controlled moving direction in a straight line or arc, or the moving direction of the wire with respect to the first or second direction.

The distances between the first or second attachment planes and the respective first and second surface planes along the third direction may be predefined or may be measured by a sensor. The sensor may be a distance sensor mounted to the first positioning system and/or to the second positioning system.

In the following, the above described procedure of the method is summarized by the following steps:

1. Defining the two-dimensional first cross-section and second cross-section of the desired component to be formed, wherein the first and second cross-sections are located at least partially in a respective first surface plane and a respective second surface plane of the raw material block.

2. Measuring or predetermining the distance between the first surface plane and the second surface plane (i.e. width of the raw material block along the third direction).

3. Dividing the perimeters of the two-dimensional cross-sections into sub-curved pairs to produce sharp corners, whereby each sharp corner is defined by a first reference point on the first perimeter of the first cross-section and the second reference point on the perimeter of the second cross-section. Thus, for example 200 point pairs on each cross-section may be defined.

4. Next, each point pair is connected by the connection line that is drawn through dedicated first reference point and second reference point.

5. Using the distance (predetermined or measured by the sensor) from the raw material block to the first positioning system and to the second positioning system and calculate the first offset and the second offset between the attachment points and the respective first reference points and respective second reference points. Thus, the desired positions of the attachment points are determined by using the calculated offsets

6. Taking the position coordinates of the attachment points (dependent on the determined first offset and the second offset) and converting the coordinates to the G-code to drive the hot wire machine.

Moreover, the hot wire cutter may move each first positioning system and second positioning system individually and independent from each other, so that the first attachment point and the second attachment point are separately movable with respect to each other along the first direction and the second direction. The movement of the first attachment point and the second attachment point along the third direction may be possible as well, so that an embodiment of the first and second positioning system may be provided which is adapted of moving the attachment points in all three directions.

In another exemplary embodiment the distance between the first positioning system and the second positioning system along the third direction is spatially fixed and not adaptable. Moreover, the first positioning system and the second positioning system may be controlled in a synchronized manner, so that the attachment points enter and leave their positions at the same time so that the movement of the wire is exactly predetermined.

The computer-readable medium may be readable by a computer or a processor. The computer-readable medium may be, for example but not limited to, an electric, magnetic, optical, infrared or semiconductor system, device or transmission medium. The computer-readable medium may include at least one of the following media: a computer-distributable medium, a program storage medium, a record medium, a computer-readable memory, a random access memory, an erasable programmable read-only memory, a computer-readable software distribution package, a computer-readable signal, a computer-readable telecommunications signal, computer-readable printed matter, and a computer-readable compressed software package.

The program element may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The program element may be available from a network, such as the World Wide Web, from which it may be downloaded.

The invention may be realized by means of a computer program respectively a software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1    shows a schematical view of the hot wire cutter and the raw material block within the first reference plane that is spanned by the first direction and the third direction; and

Fig. 2    shows a perspective view of a component to be formed comprising the two cross-sections.

Detailed Description

The illustrations in the drawings are schematical. It is noted that in different figures, similar or identical elements are provided with the same reference signs.

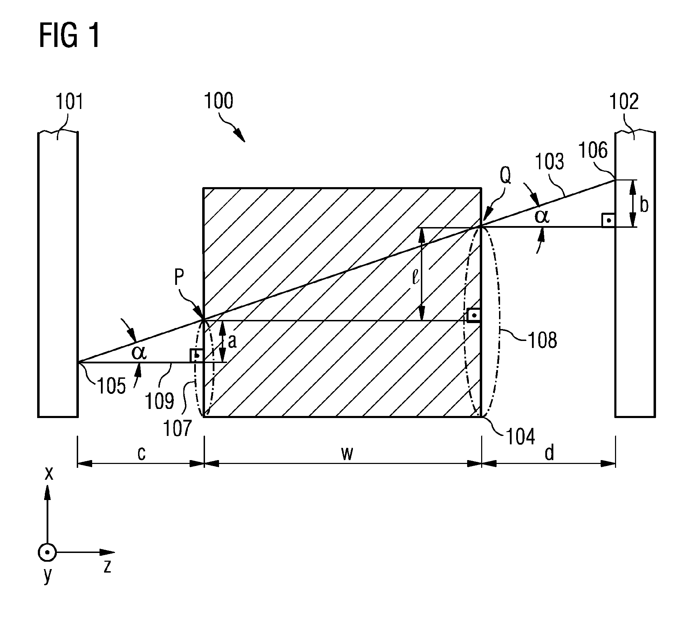

**Fig. 1** illustrates a method of controlling the operation of a hot wire cutter 100 for forming a component with a three-dimensional profile out of a raw material block 104. The hot wire cutter 100 comprises a wire extending between a first attachment point 105 and a second attachment point 106. Moreover, the hot wire cutter 100 comprises a first positioning system 101 for moving the first attachment point 105 within a first attachment plane being spanned by a first direction x and a second direction y. Moreover, the hot wire cutter 100 comprises a second positioning system 102 for moving the second attachment point 106 within a second attachment plane being spaced apart and being orientated parallel to the first attachment plane.

The method comprises the defining of the first cross-section 107 of the three-dimensional profile, wherein the first cross-section 107 is orientated with the first surface plane of the block 104. Moreover, a second cross-section 108 of the three-dimensional profile is defined, wherein the second cross-section 108 is orientated within a second surface plane of the raw material block 104. The two surface planes are parallel to the first attachment plane and are spaced apart from each other along a third direction z. On a perimeter of the first cross-section 107 a first reference point P is selected. A second reference point Q is selected on a perimeter of the second cross-section 108. A connection line 103 between the two reference points P, Q is indicative of a desired run of the wire through the raw material block 104.

Next, a first offset a within the first surface plane between the first reference point P and the first attachment point 105 is determined. Furthermore, a second offset b within the second surface plane between the second reference point Q and the second attachment point 106 is determined.

Depending on the determined first offset a and the determined second offset b, a position and a movement of the first attachment point 105 and the second attachment point 106 is controlled.

Moreover, in Fig. 1, the first reference plane that is spanned by the first direction x and the third direction z is shown. Similar to the first reference plane shown in Fig. 1 a second reference plane may be drawn, wherein the second reference plane is spanned by the second direction y and the third direction z.

In Fig. 1, a connection line 103 is shown, wherein the connection line 103 is a projection of the connection line 103 onto the first reference plane. The first offset a and the second offset b are shown as well in a projection onto the first reference plane.

As shown in Fig. 1, the raw material block 104 is located between the first positioning system 101 and the second positioning system 102. The wire runs along a predetermined and desired connection line 103 that is connected between the first attachment point 105 and the second attachment point 106. The connection line 103 runs through the raw material block (foam block) 104, so that a movement of the first attachment point 105 and the second attachment point 106 cuts the foam block 104 and so that the desired three-dimensional profile of the component may be formed.

In order to achieve a more accurate and exact controlling of the movement of the wire, the run of the connection line 103 has to be predetermined exactly. The run of the connection line 103 is defined by the position of the first attachment point 106 and the second attachment point 107.

One factor to achieve an exact controlling of the connection line 103 is to determine the first offset a and the second offset b. The first offset a denotes the distance between the first attachment point 105 and the first reference point P. The second offset denotes the distance between the second reference point Q and the second attachment point 106. The first offset a and the second offset b are dependent e.g. on a first angle $\alpha$, the distance w between the first surface plane and the second surface plane along the third direction z and the first distance c or the second distance d between the respective attachment planes and the first or second respective surface plane along the third direction z.

In particular, for defining a basis for calculation, a first reference plane spanned by the first direction and the third direction (see Fig.1) and a second reference plane spanned by the second direction and the third direction is defined. The offsets a, b are provide respective projections onto the first and second reference planes.

For example, the first offset projection a, which is the offset projection onto the first reference plane, along the first direction x between the first reference point P and the first attachment point 105 is based on the first distance c between the first attachment plane and the first surface plane along the third direction z. Moreover, the first offset projection a is based on the first angle $\alpha$ between a first line 109 running through the first attachment point 105 along the third direction z and a first projection of the connection line 103 onto the first reference plane (as shown in Fig. 1).

The lines and distances extending along the third direction, such as the first line 109, are undistorted in the first reference plane and the second reference plane.

The second offset projection b may be determined by taking into account a second distance d between the second attachment plane and the second surface plane along the third direction z and the first angle $\alpha$.

Hence, if e.g. the first distance c and the second distance d varies during movement of the hot wire cutter along a feed direction, the control method may flexibly adapt the run of the connection line 103, because an amended first offset a and am amended second offset b may be calculated immediately, so that the position of the first attachment point 105 and the second attachment point 106 may be adapted as well. Thus, the desired run of the connection line 103 may be kept along a desired run without a complex readjustment of the positioning systems 101, 102.

The feed direction defines the direction of the movement of the hot wire cutter along a direction, which is for example parallel to the second direction.

Additionally the first angle $\alpha$ or the second angle (not shown in Fig. 1, positioned in the second reference plane) may be variably calculated. For instance, the first angle $\alpha$ is based on the distance w between the first surface plane and the second surface plane along the third direction z and a third distance e between the first reference point P and the second reference point Q along the first direction x. Hence, if a smaller raw material block 104 is inserted between the positioning systems 101, 102 or if the three-dimensional profile of the component is rescaled by the user, an adapted first angle $\alpha$ and an adapted second angle is calculatable in real-time, so that the control method may be adapted easily to new profiles to be formed. Time-consuming adjustment steps of the hot wire cutter 100 may be obsolete.

In the following, the exemplary calculation steps for calculating the offsets a, b are presented. The first and second offset projections in the first reference plane may be calculated as follows:

offset a = tangent $\alpha$ x b; and
offset b = tangent $\alpha$ x d.

If the first angle $\alpha$ varies due to e.g. varying block sizes, the first angle $\alpha$ may be calculated as follows:

$$\text{tangent } \alpha = e/w$$

The same calculations may be accomplished for the second angle in the second reference plane, which is spanned by the second direction y and the third direction z. Then, the fourth distance is taken between the first reference point P and the second reference point Q along the second direction y.

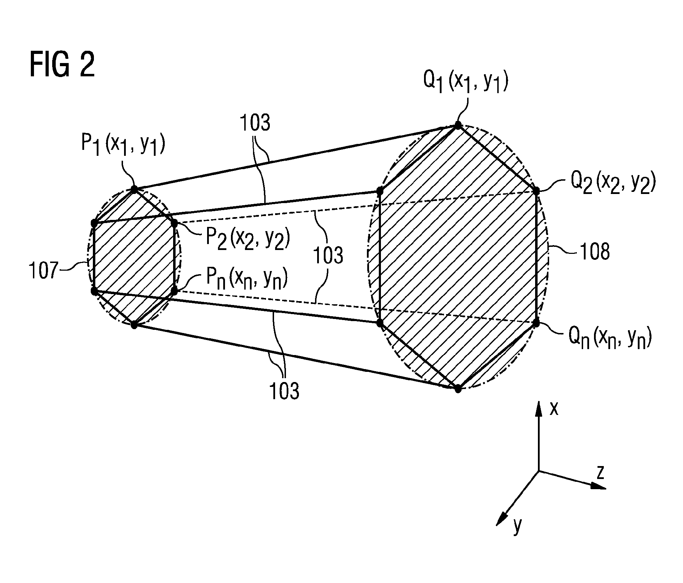

**Fig. 2** illustrates a perspective view of a component with a simple three-dimensional profile in a finished stadium. Fig, 2 shows only an example of a simple three-dimensional profile. By defining more first and second reference points P, Q, more complex shapes are as well formable.

On the left side the first cross-section 107 and on the right side the second cross-section 108 are shown. Each cross-section 107, 108 is divided by sub-curves that are connected by sharp corners. Each corner defines a reference point P1, P2, Pn, Q1, Q2, Qn. Each first reference point P1 comprises a dedicated second reference point Q1, so that the reference points P1, Q1 form a point pair that is connected by the connection line 103. The positioning system 101, 102 moves the wire that runs along the connection line 103 from the point pair P1, Q1 to the second point pair P2, Q2 and thereby cuts the raw material block 104.

Each reference point P, Q may be defined by coordinates that define the position of the reference points P, Q along the first direction x and the second direction y. The more reference points P, Q are defined onto the perimeter of the first cross-section 107 and the second cross-section 108 the smoother the surface of the component to be formed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of controlling the operation of a hot wire cutter (100) for forming a component with a three dimensional profile out of a raw material block (104), wherein the hot wire cutter (100) comprises
a wire extending between a first attachment point (105) and a second attachment point (106),
a first positioning system (101) for moving the first attachment point (105) within a first attachment plane being spanned by a first direction (x) and a second direction (y), and
a second positioning system (102) for moving the second attachment point (106) within a second attachment plane being spaced apart and being oriented parallel to the first attachment plane,
the method comprising
defining a first cross-section (107) of the three dimensional profile, wherein the first cross-section (107) is oriented within a first surface plane of the raw material block (104),
defining a second cross-section (108) of the three dimensional profile, wherein the second cross-section (108) is oriented within a second surface plane of the raw material block (104), wherein the two surface planes are parallel to the first attachment plane and are spaced apart from each other along a third direction (z),
selecting a first reference point (P) on a perimeter of the first cross-section (107),
selecting a second reference point (Q) on a perimeter of the second cross-section (108), wherein a connection line (103) between the two reference points (P, Q) is indicative of a desired run of the wire through the raw material block (104),
determining a first offset (a) within the first surface plane between the first reference point (P) and the first attachment point (105),
determining a second offset (b) within the second surface plane between the second reference point (Q) and the second attachment point (106), and
controlling a movement of the first attachment point (105) and the second attachment point (106) depending on the determined first offset (a) and the determined second offset (b).

2. Method of claim 1,
wherein the determining of the first offset (a) comprises

determining a first offset projection (a) along the first direction (x) between the first reference point (P) and the first attachment point (105) based on

i) a first distance (c) between the first attachment plane and the first surface plane along the third direction (z) and
ii) a first angle ($\alpha$) between a first line (109) running through the first attachment point (105) along the third direction (z) and a first projection of the connection line (103) onto a first reference plane being spanned by the first direction (x) and the third direction (z),

wherein the determining of the second offset (b) comprises

determining a second offset projection (b) along the first direction (x) between the second reference point (Q) and the second attachment point (106) based on

i) a second distance (d) between the second attachment plane and the second surface plane along the third direction (z) and
ii) the first angle ($\alpha$).

**3.** Method of claim 2, wherein the determining of the first offset projection (a) and/or the determining of the second offset (b) projection further comprises determining the first angle ($\alpha$) on the basis of

i) a distance (w) between the first surface plane and the second surface plane along the third direction (z) and
ii) a third distance (e) between the first reference point (P) and the second reference point (Q) along the first direction (x).

**4.** Method of one of the claims 1 to 3, wherein the determining of the first offset (a) further comprises

determining a further first offset projection along the second direction (y) between the first reference point (P) and the first attachment point (105) based on

i) the first distance (c) and
ii) a second angle between the first line (109) and a second projection of the connection line (103) onto a second reference plane being spanned by the second direction (y) and the third direction (z),

wherein the determining of the second offset (b) further comprises

determining a further second offset projection (b) along the second direction (y) between the second reference point (Q) and the second attachment point (106) based on

i) the second distance (d) and
ii) the second angle.

**5.** Method of claim 4,
wherein the determining of the further first offset projection (a) and/or the determining of the further second offset projection (b) further comprises determining the second angle on the basis of

i) the distance (w) between the first surface plane and the second surface plane along the third direction (z), and
ii) a fourth distance between the first reference point (P) and the second reference point (Q) along the second direction (y).

**6.** Method of one of the claims 1 to 5, further comprising selecting a further first reference point (P) on the perimeter of the first cross-section (107), selecting a further second reference point (Q) on the perimeter of the second cross-section (108), wherein a further connection line (103) between the two further reference points (P, Q) is indicative of a further desired run of the wire through the raw material block (104), determining a further first offset (a) within the first surface plane between the further first reference point (P) and the first attachment point (105), determining a further second offset (b) within the second surface plane between the further second reference point (Q) and the second attachment point (106), and controlling a movement of the first attachment point (105) and the second attachment point (106) depending on the determined further first offset (a) and the determined further second offset (b).

**7.** Method of one of the claims 1 to 6, wherein the controlling the movement of the first attachment point (105) and the second attachment point (106) further comprises determining coordinates of the first attachment point (105) and the second attachment point (106) on the basis of the determined first offset (a) and the second offset (b), and converting the coordinates to a g-code for controlling the hot wire cutter (100), in particular to a g-code for controlling a CNC-controlled hot wire cutter (100).

**8.** Hot wire cutter (100) for forming a component with a three dimensional profile out of a block of raw material (104), wherein the hot wire cutter is controllable by a control method according to one of the claims 1 to 7, the hot wire cutter (100) comprising the wire extending between the first attachment point (105) and the second attachment point (106), the first positioning system (101) for moving the first attachment point (105) within the first attachment plane being spanned by the first direction (x) and the second direction (y), and
the second positioning system (102) for moving the second attachment point (106) within the second attachment plane being spaced apart and being oriented parallel to the first attachment plane.

9. Control unit for controlling the operation of a hot wire cutter (100) of claim 8, the control device comprising a data processor, which is adapted for performing and/or controlling the method as set forth in one of the claims 1 to 7.

10. A computer-readable medium on which there is stored a computer program for controlling the operation of a hot wire cutter (100) of claim 8, the computer program, when being executed by a data processor, is adapted for performing the method as set forth in any one of the claims 1 to 7.

11. A program element for controlling the operation of a hot wire cutter (100) of claim 8, the program element, when being executed by a data processor, is adapted for performing the method as set forth in any one of the claims 1 to 7.

FIG 1

## FIG 2

$P_1(x_1, y_1)$

$P_2(x_2, y_2)$

$P_n(x_n, y_n)$

$Q_1(x_1, y_1)$

$Q_2(x_2, y_2)$

$Q_n(x_n, y_n)$

103

107

108

x
z
y

Europäisches
Patentamt
European
Patent Office
Office européen
des brevets

## EUROPEAN SEARCH REPORT

Application Number

EP 10 16 7625

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2004 050867 A1 (SOBOTTA CHRISTOPH [DE]) 4 May 2006 (2006-05-04) * paragraph [0016] - paragraph [0028]; figures 1-3 * ----- | 1-11 | INV. B26D5/00 B26F3/12 G05B19/404 |
| A | EP 0 603 534 B (AGIE AG IND ELEKTRONIK [CH]) 16 April 1997 (1997-04-16) * column 1, line 3 - column 7, line 26; claims 1,10; figures 1-3 * ----- | 1-7 | |
| A | EP 0 801 341 B (AGIE AG IND ELEKTRONIK [CH] AGIE SA [CH]) 6 October 2004 (2004-10-06) * paragraph [0001] - paragraph [0066]; claims 1,13; figures 1-4 * ----- | 1-7 | |
| A | FR 2 754 208 A1 (ESOX [FR]) 10 April 1998 (1998-04-10) * page 5, line 28 - page 18, line 14; figures 1-4 * ----- | 1-11 | |
| A | DE 32 37 907 A1 (FRANK ROBERT [DE]) 17 May 1984 (1984-05-17) * page 11 - page 13; figures 7-9 * ----- | 1-11 | TECHNICAL FIELDS SEARCHED (IPC) B26D B26F B23Q G05B |
| A | US 5 918 517 A (MALAPERT PHILIPPE [FR] ET AL) 6 July 1999 (1999-07-06) * column 2, line 1 - line 65; figure 1 * ----- | 1-11 | |
| A | FR 2 767 728 A1 (PROFITABLE [FR]) 5 March 1999 (1999-03-05) * page 13 - page 16; figures 1-5 * ----- | 1-11 | |

The present search report has been drawn up for all claims

| Place of search | Date of completion of the search | Examiner |
|---|---|---|
| Munich | 30 November 2010 | Maier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 16 7625

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2010

| Patent document cited in search report | | Publication date | Patent family member(s) | | Publication date |
|---|---|---|---|---|---|
| DE 102004050867 | A1 | 04-05-2006 | NONE | | |
| EP 0603534 | B | 16-04-1997 | DE | 4243393 A1 | 23-06-1994 |
| | | | EP | 0603534 A1 | 29-06-1994 |
| EP 0801341 | B | 06-10-2004 | CN | 1165722 A | 26-11-1997 |
| | | | DE | 19614134 A1 | 16-10-1997 |
| | | | EP | 0801341 A2 | 15-10-1997 |
| | | | ES | 2229292 T3 | 16-04-2005 |
| | | | JP | 3127205 B2 | 22-01-2001 |
| | | | JP | 10034443 A | 10-02-1998 |
| | | | TW | 380070 B | 21-01-2000 |
| | | | US | 5808263 A | 15-09-1998 |
| FR 2754208 | A1 | 10-04-1998 | AU | 4559797 A | 24-04-1998 |
| | | | DE | 69729642 D1 | 29-07-2004 |
| | | | EP | 0929385 A1 | 21-07-1999 |
| | | | WO | 9814311 A1 | 09-04-1998 |
| DE 3237907 | A1 | 17-05-1984 | NONE | | |
| US 5918517 | A | 06-07-1999 | NONE | | |
| FR 2767728 | A1 | 05-03-1999 | NONE | | |

EPO FORM P0459

For more details about this annex : see Official Journal of the European Patent Office, No. 12/82